(19) Europäisches Patentamt / European Patent Office / Office européen des brevets

(11) **EP 4 693 457 A1**

(12) **EUROPEAN PATENT APPLICATION**
published in accordance with Art. 153(4) EPC

(43) Date of publication:
**11.02.2026 Bulletin 2026/07**

(21) Application number: **23930918.0**

(22) Date of filing: **15.12.2023**

(51) International Patent Classification (IPC):
$H01M\ 4/36^{(2006.01)}$    $H01M\ 4/13^{(2010.01)}$
$H01M\ 4/48^{(2010.01)}$    $H01M\ 4/62^{(2006.01)}$
$H01M\ 4/587^{(2010.01)}$

(52) Cooperative Patent Classification (CPC):
**H01M 4/13; H01M 4/36; H01M 4/48; H01M 4/587;
H01M 4/62; Y02E 60/10**

(86) International application number:
**PCT/JP2023/044960**

(87) International publication number:
**WO 2024/202298 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2023 JP 2023052968**

(71) Applicant: **AESC Japan Ltd.
Yokohama-Shi, Kanagawa 220-0012 (JP)**

(72) Inventors:
• **AKAGAWA, Kazuhiro
  Zama-shi, Kanagawa 252-0012 (JP)**
• **LU, Chiaying
  Zama-shi, Kanagawa 252-0012 (JP)**
• **SHIMOJI, Risa
  Zama-shi, Kanagawa 252-0012 (JP)**

(74) Representative: **Becker, Eberhard
  Becker Kurig & Partner
  Patentanwälte mbB
  Bavariastraße 7
  80336 München (DE)**

(54) **NEGATIVE ELECTRODE FOR NONAQUEOUS ELECTROLYTE SECONDARY BATTERY, AND NONAQUEOUS ELECTROLYTE SECONDARY BATTERY USING SAME**

(57)    An objective of the present invention is to suppress the expansion and contraction when charging and discharging a nonaqueous electrolyte secondary battery, including lithium ion secondary batteries, when an Si-based negative electrode active material is used, to improve the lifespan (cycle characteristics) of the nonaqueous electrolyte secondary battery, and to improve rapid charging properties. The negative electrode active material contains: a silicon-based active material (A) containing $SiO_x$ (in the formula, x is a number satisfying $0.5 \leq x \leq 1.6$); a carbon-based active material (B) composed of secondary particles formed by aggregating primary particles; and a carbon-based active material (C) composed of primary particles different from the primary particles of the carbon-based active material (B). If the value of the maximum average particle diameter among the average particle diameters is $D50_{max}$ and the value of the minimum average particle diameter among the average particle diameters is $D50_{min}$, the value of $D50_{max}/D50_{min}$ is smaller than 2.

EP 4 693 457 A1

**Description**

Technical Field

The invention relates to a negative electrode for a non-aqueous electrolyte secondary battery, and a non-aqueous electrolyte secondary battery using the negative electrode for a non-aqueous electrolyte secondary battery.

Related Art

Non-aqueous electrolyte secondary batteries have been put to practical use as automotive batteries including hybrid vehicles and electric vehicles, and are also utilized as batteries for small electronic devices including mobile terminals. As such batteries, lithium-ion secondary batteries in particular are widely used. Lithium-ion secondary batteries are required to possess various properties, such as output properties, energy density, capacity, lifetime, and high-temperature stability. To miniaturize batteries in particular, improving the volumetric energy density of batteries and increasing capacity have become urgent issues. Lithium-ion secondary batteries for electric vehicles in particular are required to improve energy density to further extend the driving range. Therefore, various improvements have been made to battery configurations including electrodes and electrolytes.

It is known to use graphite as a negative electrode active material for lithium-ion secondary batteries. Graphite is inexpensive, has little degradation due to charge and discharge cycles of batteries, and has high safety, so it is widely used. However, in the conventional lithium-ion secondary batteries using graphite materials as negative electrode active materials, further improvement in energy density is difficult to expect, so exploration of negative electrode active material materials with even higher capacity has been conducted. As high-capacity negative electrode active materials, silicon-based negative electrode active materials including silicon and silicon oxide (hereinafter referred to as "Si-based negative electrode active materials", "Si-based negative electrode active materials", etc.) are drawing attention.

For example, Patent Document 1 discloses a lithium-ion secondary battery using three types of negative electrode active materials including $SiO_x$ as a negative electrode active material, graphite with an average particle diameter exceeding 15 $\mu$m and not exceeding 25 $\mu$m, and graphite which has an average particle diameter of 8 $\mu$m or more and 15 $\mu$m or less and in which the surface of the graphite particles is coated with amorphous carbon. Patent Document 2 discloses a negative electrode containing $SiO_x$ particles with a D50 particle diameter of 5 $\mu$m or less and a carbon material including flake graphite.

[Prior Art Document(s)]

[Patent Document(s)]

Patent Document 1: Japanese Patent Application Laid-open No. 2016-219275
Patent Document 2: Japanese Patent Application Laid-open No. 2019-29311

SUMMARY OF INVENTION

[Issues to be solved by the invention]

In Patent Document 1, in the case where Li ions are introduced into a negative electrode, the cycle properties are improved by using $SiO_x$, graphite with an average particle diameter exceeding 15 $\mu$m and not exceeding 25 $\mu$m, and graphite particles with an average particle diameter of 8 $\mu$m or more and 15 $\mu$m or less in combination. Patent Document 2 discloses that the most preferable lower limit value of the ratio rc/rs of the particle diameter (rc) of flake graphite to the D50 particle diameter (rs) of $SiO_x$ particles for suppressing the volume change caused by expansion and contraction is 2.3. However, such conditions are insufficient to suppress the loss of contact between active material particles due to the expansion and contraction of the negative electrode that is repeated during the time of charge and discharge of the lithium-ion secondary battery.

An objective of the present invention is to suppress the expansion and contraction when charging and discharging a nonaqueous electrolyte secondary battery, including lithium ion secondary batteries, when an Si-based negative electrode active material is used, to improve the lifespan (cycle characteristics) of the nonaqueous electrolyte secondary battery.

[Means for solving the issues]

An embodiment is a negative electrode for a non-aqueous electrolyte secondary battery. The negative electrode includes a negative electrode active material layer including a negative electrode active material, a binder, and a conductive additive. The negative electrode includes a negative electrode active material, a binder, and a conductive additive. The negative electrode active material includes: a silicon-based active material (A), including $SiO_x$ (x being a number satisfying $0.5 \leq x \leq 1.6$); a carbon-based active material (B) formed by secondary particles formed by aggregation of primary particles; and a carbon-based active material (C) formed by primary particles differing from primary particles of the carbon-based active material (B). The average particle diameter of each of the silicon-based active material (A), the carbon-based active material (B), and the carbon-based active material (C) are $D50_A[\mu m]$, $D50_B[\mu m]$, and $D50_C[\mu m]$. The maximum value among the average particle diameters is referred to as $D50_{max}$, and the minimum value among the average particle diameters is $D50_{min}$, and the value of $D50_{max}/D50_{min}$ is smaller than 2.

[Inventive effects]

According to the negative electrode for the non-aqueous electrolyte secondary battery of the invention, a negative electrode for a non-aqueous electrolyte secondary battery that suppresses expansion and contraction and excels in rapid charge and discharge even in the case of using Si-based negative electrode active material can be provided, and a non-aqueous electrolyte secondary battery using the negative electrode can also be provided.

DESCRIPTION OF EMBODIMENTS

Embodiments of the invention are described below. An embodiment is a negative electrode for a non-aqueous electrolyte secondary battery. The negative electrode includes a negative electrode active material layer including a negative electrode active material, a binder, and a conductive additive. The negative electrode includes a negative electrode active material, a binder, and a conductive additive. The negative electrode active material includes: a silicon-based active material (A) including $SiO_x$ (where x is a number satisfying $0.5 \leq x \leq 1.6$); a carbon-based active material (B) consisting of secondary particles formed by aggregating primary particles; and a carbon-based active material (C) consisting of primary particles different from the primary particles of the carbon-based active material (B). The average particle diameter of each of the silicon-based active material (A), the carbon-based active material (B), and the carbon-based active material (C) are $D50_A[\mu m]$, $D50_B[\mu m]$, and $D50_C[\mu m]$. The maximum value among the average particle diameters is referred to as $D50_{max}$, and the minimum value among the average particle diameters is $D50_{min}$, and the value of $D50_{max}/D50_{min}$ is smaller than 2.

In the embodiment, a non-aqueous electrolyte secondary battery is a battery that mainly uses an organic solvent-based electrolyte and is capable of repeatedly performing charge and discharge. As the non-aqueous electrolyte secondary battery, examples may include a lithium-ion secondary battery. The non-aqueous electrolyte secondary battery includes, as a component, a negative electrode for the non-aqueous electrolyte secondary battery. In the embodiment, the negative electrode is a thin plate-shaped or sheet-shaped battery component in which a negative electrode active material layer is formed by applying or rolling and drying a mixture containing a negative electrode active material on a negative electrode current collector that is a metal foil such as copper foil. That is, the negative electrode is formed by a negative electrode current collector and negative electrode active material layers containing a negative electrode active material applied on both surfaces of the negative electrode current collector. In the embodiment, the negative electrode active material layer may include a negative electrode active material, a binder, and a conductive additive. The negative electrode active material is a substance used in the negative electrode among substances related to the reactions that generate electrical energy. The binder is, in general, a substance for binding negative electrode active material particles in order to bring negative electrode active materials in particle form into electrical contact with each other. The conductive additive is a material for reducing the resistance of the electrode.

In the embodiment, the negative electrode active material includes a silicon-based active material (A) including: $SiO_x$ (x being a number satisfying $0.5 \leq x \leq 1.6$) and a carbon-based active material. Here, the silicon-based active material (A) is a silicon oxide having a chemical formula $SiO_x$, and x in the formula is a number satisfying $0.5 \leq x \leq 1.6$. The silicon-based active material may be a single compound or a mixture of multiple compounds. The silicon-based active material (A) may be in the form of particles having substantially uniform or non-uniform sizes. The negative electrode active material may further contain a lithium silicon compound. The lithium silicon compound is a compound including the lithium element and the silicon element in chemical formulas such as $Li_{4.4}Si$, $Li_{3.75}Si$, and $Li_4SiO_4$ (lithium silicate). The lithium silicon compound is a stable compound and does not release lithium during charge and discharge of the non-aqueous electrolyte secondary battery. Therefore, by using in combination with a silicon-based active material that tends to cause volume change during charge and discharge of the non-aqueous electrolyte secondary battery, a volume change of the negative electrode active material layer can be suppressed. Furthermore, the silicon-based active material (A) may be doped with lithium in advance. In the case where a lithium silicon compound or lithium-doped silicon is present, the average particle diameter of the silicon-based active material (A) refers to the overall average particle diameter of the silicon-containing compound, etc., unless otherwise specified. In the specification, the average particle diameter of the silicon-based active material (A) is represented as $D50_A$. A silicon-based active material having an average particle diameter of 7 $\mu$m or more and 13 $\mu$m can be used as the silicon-based active material (A) of the embodiment. In the specification, regarding the particle diameter of the particles of the negative electrode active material, based on the volume reference particle size distribution, the particle diameter when the cumulative particle volume from the small particle side reaches a [%] of the particle volume is represented as Da[$\mu$m]. D50 is the particle diameter (unit: $\mu$m) when the cumulative particle volume from the small particle side reaches 50 [%] of the particle volume based on the volume-based particle size distribution, and is an average particle diameter.

The negative electrode active material further includes a carbon-based active material. The carbon-based active material may be natural graphite, artificial graphite, hard carbon, soft carbon, or any mixture thereof. Here, graphite is a carbon material of a hexagonal system with a hexagonal crystal shape. Natural graphite and artificial graphite include natural graphite having a coating of amorphous carbon and artificial graphite having a coating of amorphous carbon. Here, amorphous carbon is a carbon material that may have a structure partially similar to graphite, has a structure in which microcrystals are randomly networked, and is generally amorphous. Examples of amorphous carbon include carbon black, coke, activated carbon, carbon fiber, hard carbon, soft carbon, mesoporous carbon, etc. In the case where artificial graphite is used, it is preferable that an interlayer distance d value ($d_{002}$) is 0.33 nm or more. The crystal structure of artificial graphite is generally thinner than that of natural graphite. In the case where artificial graphite is used as a negative electrode active material for a non-aqueous electrolyte secondary battery, particularly a lithium-ion secondary battery, it is necessary to have an interlayer distance into which lithium ions can be inserted. The interlayer distance that lithium ions can be inserted and extracted can be estimated by the d value ($d_{002}$), and if the d value is 0.33 nm or more, insertion and extraction of lithium ions is performed without problems. In the embodiment, at least two types of carbon-based active materials are included. The two types of carbon-based active materials are referred to as a carbon-based active material (B) and a carbon-based active material (C), respectively. The carbon-based active material (B) may be a carbon-based active material formed by secondary particles formed by aggregation of primary particles. The carbon-based active material (B) may be artificial graphite whose surface is coated with amorphous carbon. Primary particles of the carbon-based active material (C) are different from the primary particles of the carbon-based active material (B), and the carbon-based active material (C) is a carbon-based active material in which primary particles do not aggregate and do not form secondary particles. The carbon-based active material (C) may be artificial graphite whose surface is not coated. In the specification, the average particle diameter of the carbon-based active material (B) is represented as $D50_B$, and the average particle diameter of the carbon-based active material (C) is expressed as $D50_C$ (both units are $\mu$m). A carbon-based active material having an average particle diameter of 10 $\mu$m to 30 $\mu$m can be used as the carbon-based active material (B) of the embodiment, and a carbon-based active material having an average particle diameter of 6 $\mu$m to 25 $\mu$m can be used as the carbon-based active material (C) of the present embodiment.

In the embodiment, among the respective average particle diameters $D50_A$[$\mu$m], $D50_B$[$\mu$m], and $D50_C$[$\mu$m] of the silicon-based active material (A), the carbon-based active material (B), and the carbon-based active material (C), and when the maximum average particle diameter value is defined as $D50_{max}$, and the minimum average particle diameter value among the average particle diameters is defined as $D50_{min}$, the value of $D50_{max}/D50_{min}$ is smaller than 2. By combining negative electrode active materials having such a relationship of average particle diameters, the packing density of the negative electrode active material particles is optimized, and it becomes possible to suppress the expansion and contraction that occur alongside charge and discharge.

Also, regarding the blending of the negative electrode active material, it is particularly preferable that the content of the silicon-based active material (A) is greater than 5 mass% and less than 50 mass% with respect to the total amount of the negative electrode active material in the negative electrode active material layer. More preferably, the content of the silicon-based active material (A) is greater than 10 mass% and less than 20 mass%. In the case where the content of the silicon-based active material (A) becomes excessively high, the volume change of the negative electrode active material during charge and discharge of the non-aqueous electrolyte secondary battery becomes large, which is not preferable. Also, when the content of the silicon-based active material (A) becomes excessively small, the effect of achieving high energy density is difficult to obtain.

The above negative electrode active material can achieve good electrical contact by binding particles with a binder. The binder preferably contains poly(meth)acrylic acid, a metal salt of poly(meth)acrylic acid, an alkyl ester of poly(meth)acrylic acid, or any mixture thereof. Compounds suitable as binders are, for example, polyacrylic acid, polymethacrylic acid; sodium polyacrylate, potassium polyacrylate, sodium polymethacrylate, potassium polymethacrylate; ethyl polyacrylate, ethyl polyacrylate, butyl polyacrylate, methyl polymethacrylate, ethyl polymethacrylate, butyl polymethacrylate, and may be any mixture thereof. The content of the binder is preferably 2 mass% or more and less than 10 mass% with respect to the total solid content of the negative electrode active material layer. In the case where the binder content is excessively high, the portion where the active material surface is covered by the binder increases, so there is a risk that ionic conductivity and electronic conductivity may decrease. Also, in the case where the binder content becomes excessively small, there is a risk that electrical contact between negative electrode active material particles may not be performed appropriately.

As a component of the binder, in addition to the compound, it is particularly preferable to further include carboxymethyl cellulose (referred to as "CMC"), which is a derivative of cellulose, or a metal salt of carboxymethyl cellulose (for example, sodium carboxymethyl cellulose, potassium carboxymethyl cellulose). Carboxymethyl cellulose or a metal salt of carboxymethyl cellulose serves to stabilize the binder compound and also stabilizes the electrical contact of the negative electrode active material. In the case of further adding CMC or a metal salt of CMC as a component of the binder, the content of CMC or the metal salt of CMC is preferably 0.05 mass% or more and 1.5 mass% or less, particularly 0.08 mass% or more and 0.8 mass% or less, and further 0.15 mass% or more and 0.30 mass% or less, with respect to the total solid content of the negative electrode active material layer.

In the embodiment, it is preferable that the content of the silicon-based active material (A) is 5 mass% or more and 50 mass% or less with respect to the total solid content of the negative electrode active material layer, and the content of the binder is 2 mass% or more and 8 mass% or less with respect to the total solid content of the negative electrode active material layer.

It is further preferable that the content of the silicon-based active material (A) is 10 mass% or more and 20 mass% or less with respect to the total solid content of the negative electrode active material layer, and the content of the binder is 2 mass% or more and 6 mass% or less with respect to the total solid content of the negative electrode active material layer.

Moreover, it is further preferable that the content of the silicon-based active material (A) is 15 mass% or more and 20 mass% or less with respect to the total solid content of the negative electrode active material layer, and the content of the binder is 2.5 mass% or more and 3.8 mass% or less with respect to the total solid content of the negative electrode active material layer.

By appropriately adjusting the content of the silicon-based active material (A) and the binder, the energy density of the non-aqueous electrolyte secondary battery can be improved.

The negative electrode active material layer may further include a conductive additive. Examples of the conductive additive include carbon materials such as carbon fibers like carbon nanofibers, carbon black such as acetylene black and Ketjen black, activated carbon, graphite, mesoporous carbon, fullerenes, and carbon nanotubes. In the embodiment, it is particularly preferable to use carbon nanotubes (referred to as "CNT") as the conductive additive. CNT is a substance in which a six-membered ring network of carbon atoms (graphene) has a single-layer or multi-layer coaxial tube structure, and there are single-wall carbon nanotubes (single-layer, referred to as "SWCNT") and multi-wall carbon nanotubes (multi-layer, referred to as "MWCNT"). Either CNT may be used, but it is preferable to use bundled SWCNT having a shape in which SWCNTs gather and are made longer in diameter and length than a single SWCNT, so that the conductive network in the negative electrode does not break at the time when expansion or contraction occurs in the negative electrode active material layer. SWCNT is mixed with at least one of the silicon-based active material (A), the carbon-based active material (B), and the carbon-based active material (C) in a state of being dispersed in a solvent in advance, and by adhering SWCNT to the surface of the at least one active material, SWCNT that is made longer in diameter and length can be arranged between at least two of the silicon-based active material (A), the carbon-based active material (B), and the carbon-based active material (C). Furthermore, to support the conductivity in the negative electrode active material layer, carbon black may be used together, other than SWCNT.

In the case where CNT is used as the conductive additive, the content of CNT is preferably 0.01 mass% or more and 1 mass% or less, particularly 0.03 mass% or more and 0.8 mass% or less, and further 0.1 mass% or more and 0.5 mass% or less, with respect to the total solid content of the negative electrode active material layer.

In addition, electrode additives generally used for electrode formation, such as thickeners, dispersants, stabilizers, and the like, can be appropriately used in the negative electrode active material layer.

Another embodiment of the invention is a non-aqueous electrolyte secondary battery that includes at least a negative electrode for a non-aqueous electrolyte secondary battery according to an embodiment, a positive electrode for a non-aqueous electrolyte secondary battery, a separator, and a non-aqueous electrolyte.

The non-aqueous electrolyte secondary battery of the embodiment includes, as the components thereof, at least a negative electrode for a non-aqueous electrolyte secondary battery, a positive electrode for a non-aqueous electrolyte secondary battery, a separator, and a non-aqueous electrolyte.

In the embodiment, the positive electrode is a thin plate-shaped or sheet-shaped battery component in which a positive electrode active material layer is formed by applying or rolling and drying a mixture containing a positive electrode active material on a positive electrode current collector, which is a metal foil such as aluminum foil. That is, the positive electrode is formed by a positive electrode current collector and a positive electrode active material layer including a positive electrode active material applied on both surfaces or one surface thereof. In the embodiment, the positive electrode active material layer may include a positive electrode active material and a binder. The positive electrode active material is a substance used in the positive electrode among substances involved in the reaction that generates electrical energy. The binder is, in general, a substance for binding positive electrode active material particles to bring positive electrode active materials in particle form into electrical contact with each other.

The positive electrode active material used in the embodiment may include a lithium-nickel-based composite oxide as the positive electrode active material. The lithium-nickel-based composite oxide is a transition metal composite oxide containing lithium and nickel represented by a general formula $Li_xNi_yMe_{(1-y)}O_2$, where Me is at least one metal selected from a group consisting of Al, Mn, Na, Fe, Co, Cr, Cu, Zn, Ca, K, Mg, and Pb). It is particularly preferable to contain a lithium-manganese-based composite oxide. Examples of the lithium-manganese-based composite oxide include lithium manganate ($LiMnO_2$) having a zigzag-layered structure, spinel-type lithium manganate ($LiMn_2O_4$), and the like. The positive electrode active material particularly includes a lithium nickel manganese cobalt composite oxide having a layered crystal structure represented by a general formula $Li_xNi_yCo_zMn_{(1-y-z)}O_2$. Here, x in the general formula is $1 \leqq x \leqq 1.2$, y and z are positive numbers satisfying y+z<1, and the value of y is 0.5 or more. Since it becomes difficult to synthesize a single-phase composite oxide as the proportion of manganese increases, it is desirable that $1-y-z \leqq 0.4$. To obtain a high-capacity battery, it is particularly preferable that y>1-y-z and y>z. The lithium-nickel-based composite oxide having the general formula is a lithium-nickel-cobalt-manganese composite oxide (hereinafter may be referred to as "NCM"). NCM is a lithium-nickel-based composite oxide suitably used for achieving increasing the capacity of a battery.

As a binder that forms the positive electrode active material layer together with the positive electrode active material, examples may include fluorine resins such as polyvinylidene fluoride (PVDF), polytetrafluoroethylene (PTFE), and polyvinyl fluoride (PVF), conductive polymers such as polyanilines, polythiophenes, polyacetylenes, and polypyrroles, synthetic rubbers such as styrene butadiene rubber (SBR), butadiene rubber (BR), chloroprene rubber (CR), isoprene rubber (IR), and acrylonitrile butadiene rubber (NBR), or polysaccharides such as carboxymethyl cellulose (CMC), xanthan gum, guar gum, and pectin.

The positive electrode active material layer may also include a conductive additive in some cases. As conductive additives that may be used in some cases, examples may include carbon materials such as carbon fibers like carbon nanofibers, carbon black such as acetylene black and Ketjen black, activated carbon, graphite, mesoporous carbon, fullerenes, and carbon nanotubes. In the embodiment, it is particularly preferable to use carbon nanotubes (CNT) as the conductive. CNT is a substance in which a six-membered ring network of carbon atoms (graphene) has a single-layer or multi-layer coaxial tube structure, and there are single-wall carbon nanotubes (SWCNT) and multi-wall carbon nanotubes (MWCNT). Either CNT may be used, but it is preferable to use bundled SWCNT having a shape in which SWCNTs gather and are made longer in diameter and length than a single SWCNT, so that the conductive network in the positive electrode does not break at the time when expansion or contraction occurs in the positive electrode active material layer. Furthermore, to support the conductivity in the positive electrode active material layer, carbon black may be used together, other than SWCNT. In addition, electrode additives generally used for electrode formation, such as thickeners, dispersants, stabilizers, and the like, can be appropriately used in the positive electrode active material layer.

The non-aqueous electrolyte secondary battery of the embodiment includes a separator as a component. For the separator, for example, a polyolefin film can be used. Polyolefin refers to a compound obtained by polymerizing or copolymerizing $\alpha$-olefins such as ethylene, propylene, butene, pentene, and hexene, and examples include polyethylene, polypropylene, polybutene, polypentene, polyhexene, and copolymers thereof. In the case where a polyolefin film is used as the separator, it is convenient to have a structure having pores that are closed as the battery temperature rises, that is, a porous or microporous polyolefin film. With the polyolefin film having such a structure, even if the battery temperature rises, the separator can be closed (shut down) to cut off ion flow. That is, a uniaxially stretched polyolefin film contracts and closes the pores when the battery is heated, making it possible to prevent a short circuit between the positive and negative electrodes. To exhibit the shutdown effect, it is very preferable to use a porous polyethylene membrane.

Also, a crosslinked film can be used as the separator. Since porous or microporous polyolefin films have the property of contracting when heated, the film contracts and shuts down as the battery overheats. However, if the thermal shrinkage rate of the film is too large, the area of the film changes greatly, which may conversely cause large current flow. A crosslinked polyolefin film has an appropriate thermal shrinkage rate, so the film can contract properly to close the pores without greatly changing the area even at the time of overheating.

The separator used in the embodiment may have a heat-resistant fine particle layer on one side or both sides of the separator. At this time, the heat-resistant fine particle layer provided to prevent overheating of the battery has a heat resistance with a heat-resistant temperature of 150°C or higher and is formed by inorganic fine particles that are stable in electrochemical reactions. Examples of such inorganic fine particles include inorganic oxides such as silica, alumina ($\alpha$-alumina, $\beta$-alumina, $\theta$-alumina), iron oxide, titanium oxide, barium titanate, and zirconium oxide; and minerals such as boehmite, zeolite, apatite, kaolin, spinel, mica, and mullite.

The non-aqueous electrolyte secondary battery of the embodiment includes a non-aqueous electrolyte. The non-aqueous electrolyte is an electrically conductive substance in which an ionic substance is dissolved in an organic solvent. The negative electrode for a non-aqueous electrolyte secondary battery and the positive electrode for a non-aqueous electrolyte secondary battery are superimposed, a separator is disposed therebetween, and a non-aqueous electrolyte secondary battery element including the components and the non-aqueous electrolyte is one unit of the main component of the non-aqueous electrolyte secondary battery. Usually, a laminate formed by superimposing multiple negative electrodes for a non-aqueous electrolyte secondary battery and multiple positive electrodes for a non-aqueous electrolyte secondary battery via multiple separators is immersed in the non-aqueous electrolyte. The non-aqueous electrolyte that can be used in the embodiment is mainly a non-aqueous electrolytic solution, and preferably is a mixture including chain carbonates such as dimethyl carbonate (DMC), diethyl carbonate (DEC), ethyl methyl carbonate (EMC), di-n-propyl carbonate, di-t-propyl carbonate, di-n-butyl carbonate, di-isobutyl carbonate, or di-t-butyl carbonate, and cyclic carbonates such as propylene carbonate (PC) and ethylene carbonate (EC). The non-aqueous electrolytic solution is obtained by dissolving lithium salts such as lithium hexafluorophosphate ($LiPF_6$), lithium borofluoride ($LiBF_4$), LiFSI, and lithium perchlorate ($LiClO_4$) in such a carbonate mixture.

In addition, the non-aqueous electrolytic solution may include a cyclic carbonate compound different from the cyclic carbonates as an additive. Vinylene carbonate (VC) can serve as an example of cyclic carbonate used as an additive. Moreover, a cyclic carbonate compound having halogen may be used as an additive. These cyclic carbonates are also compounds that form protective films on the negative electrode for non-aqueous electrolyte secondary battery and the positive electrode for non-aqueous electrolyte secondary battery during the charge and discharge processes of the non-aqueous electrolyte secondary battery. In particular, the compounds are compounds that can prevent the positive electrode active material containing lithium-nickel-based composite oxide from being attached by sulfur-containing compounds such as the disulfonic acid compound or disulfonic acid ester compound. Examples of the cyclic carbonate compounds having halogen include fluoroethylene carbonate (FEC), difluoroethylene carbonate, trifluoroethylene carbonate, chloroethylene carbonate, dichloroethylene carbonate, trichloroethylene carbonate, and the like. Fluoroethylene carbonate, which is a cyclic carbonate compound having halogen and having an unsaturated bond, is particularly preferably used.

Moreover, the non-aqueous electrolytic solution may further contain a disulfonic acid compound as an additive. The disulfonic acid compound is a compound having two sulfo groups in one molecule, and includes a disulfonic acid salt compound in which the sulfo groups form salts with metal ions, or a disulfonic acid ester compound in which the sulfo groups form esters. One or two of the sulfo groups of the disulfonic acid compound may form salts together with metal ions, or may be in an anionic state. Examples of the disulfonic acid compound include methanedisulfonic acid, 1,2-ethanedisulfonic acid, 1,3-propanedisulfonic acid, 1,4-butanedisulfonic acid, benzenedisulfonic acid, naphthalenedisulfonic acid, biphenyldisulfonic acid, and salts thereof (lithium methanedisulfonate, lithium 1,2-ethanedisulfonate, etc.), and anions thereof (methanedisulfonic acid anion, 1,2-ethanedisulfonic acid anion, etc.). Moreover, examples of the disulfonic acid compound include disulfonic acid ester compounds, and chain disulfonic acid esters such as alkyl diesters or aryl diesters of methanedisulfonic acid, 1,2-ethanedisulfonic acid, 1,3-propanedisulfonic acid, 1,4-butanedisulfonic acid, benzenedisulfonic acid, naphthalenedisulfonic acid, or biphenyldisulfonic acid; as well as cyclic disulfonic acid esters such as methylene methanedisulfonic acid ester, ethylene methanedisulfonic acid ester, propylene methane disulfonic acid ester are used.

The non-aqueous electrolyte secondary battery of the embodiment is usually sealed with an exterior body. Sealing means that at least a portion of the non-aqueous electrolyte secondary battery element is wrapped with an exterior body material so as not to be exposed to outside air. The exterior body of the non-aqueous electrolyte secondary battery has gas barrier properties and is either a housing capable of sealing the non-aqueous electrolyte secondary battery element, or has a bag shape formed by a flexible material. For the exterior body, an aluminum can, an aluminum laminate sheet in which aluminum foil and polypropylene etc., are laminated, etc., can be suitably used. That is, any material may be used for the exterior body as long as it is a material that does not allow the non-aqueous electrolyte to leach to the outside. A laminate film having a heat-resistant protective layer such as polyester, polyamide, liquid crystalline polymer, etc., on the outermost layer of the exterior body, and a sealant layer including a thermoplastic resin formed by polyethylene, polypropylene, ionomer, acid-modified polyethylene such as maleic acid-modified polyethylene, acid-modified polypropylene such as maleic acid-modified polypropylene, polyethylene terephthalate (PET), polyethylene naphthalate (PEN), polyethylene isophthalate (PEI), blends of PET and PEN, blends of PET and PEI, polyamide resin, blends of polyamide resin and PET, blends of xylylene group-containing polyamide and PET, etc., in the innermost layer can be used. The exterior body may be formed by using one or multiple of the laminate films combined and bonded or welded together, and further multilayered. Aluminum, tin, copper, nickel, stainless steel can be used as the gas barrier metal layer. The thickness of the metal layer is preferably 30 µm to 50 µm. Particularly suitably, aluminum laminate, which is a laminate of an aluminum foil and a polymer such as polyethylene and polypropylene, can be used. The non-aqueous electrolyte secondary battery of the embodiment may have various forms such as a coin-type battery, a laminated battery, a wound-type battery, etc.

The embodiments of the invention have been described above. Examples of the invention will be described below. The embodiments and examples are merely illustrative descriptions of the invention, and are not intended to limit the technical scope of the invention to the configurations of specific embodiments or specific examples.

(Preparation of Positive Electrode, All Examples and Comparative Examples)

Li(Ni$_{.9}$Co$_{0.05}$Mn$_{0.05}$)O$_2$ (97.5 mass%) as the positive electrode active material, polyvinylidene fluoride (PVDF, 1.5 mass%) as the positive electrode binder, and carbon nanotubes (multi-wall carbon nanotubes (MWCNT, 1 mass%)) as the conductive additive were mixed to form a positive electrode active material mixture. A positive electrode slurry was prepared by dispersing the positive electrode active material mixture in N-methyl-2-pyrrolidone. The positive electrode slurry was uniformly applied to one surface of an aluminum current collector having a thickness of 12 $\mu$m. The thickness of the coating film was adjusted so that the initial charge capacity per unit area became 4.0 mAh/cm$^2$. After drying, compression molding was performed with a roll press, and the positive electrode was prepared by adjusting the density of the positive electrode active material layer to 3.5 g/cm$^3$.

(Preparation of Negative Electrode, Example 1)

SiO$_x$ (x=1, D$_{50}$=11.0 $\mu$m) that is the silicon-based active material (A) as a negative electrode active material, artificial graphite (D$_{50}$: 13.9 $\mu$m) that is the carbon-based active material (B) including secondary particles formed by aggregating primary particles, and artificial graphite (D$_{50}$: 9.5 $\mu$m) as a carbon-based active material (C) including primary particles that do not aggregate with each other and do not form secondary particles were used. A negative electrode active material mixture was obtained with a negative electrode active material mass ratio (a mass ratio between SiO$_x$ of the silicon-based active material (A) to artificial graphite of the carbon-based active materials (B) and (C) of the negative electrode, represented as ((A)/[(B)+(C)])) of 15/85, and a mass ratio between the carbon-based active material (B) and the carbon-based active material (C) of 1/1. The active material mixture (96.6 mass%), a polyacrylic acid-based binder as a negative electrode binder (trade name: 10CLPAH, Fujifilm Wako Pure Chemical Corporation, 3.0 mass%), single-wall carbon nanotubes (SWCNT, 0.3 mass%) as a conductive additive, and carboxymethyl cellulose (CMC, 0.1 mass%) were dissolved and dispersed in an aqueous solvent to prepare a negative electrode slurry. This negative electrode slurry was uniformly applied onto a Cu current collector having a thickness of 8 $\mu$m. The thickness of the coating film was adjusted so that the initial charge capacity per unit area became 4.3 mAh/cm$^2$. Then, compression molding was performed with a roll press, and the negative electrode was prepared by adjusting the density of the negative electrode active material layer to 1.65 g/cm$^3$.

The SiO$_x$ used in the examples can be obtained as appropriate from, for example, Sigma-Aldrich Co., High Purity Chemical Laboratory Co., Ltd., Kanto Chemical Co., Inc., Fujifilm Wako Pure Chemical Corporation, etc., and the surface state such as surface coating components and roughness, particle diameter, etc. can be adjusted by using these alone or in combination and employing conventional methods such as heat treatment such as firing, chemical treatment such as CVD method, mechanical treatment such as pulverization and classification, and sputtering. Also, graphite can be obtained as appropriate from Nippon Graphite Industries, Co., Ltd., Resonac Corporation, etc., and the surface state such as surface coating components and roughness, particle diameter, etc. can be adjusted by using these alone or in combination and employing known methods such as heat treatment such as firing, chemical treatment such as CVD method, mechanical treatment such as pulverization and classification, and sputtering.

The conductive additive used here was a bundled SWCNT having a shape in which SWCNTs gather and are made longer in diameter and length than a single SWCNT, with a length of about 1 $\mu$m and a diameter of about 10 nm. Multiple conductive additives were arranged on the surface of the negative electrode active material so as to contact any two or more types of negative electrode active materials among the silicon-based active material (A), the carbon-based active material (B), and the carbon-based active material (C). Such SWCNTs can be obtained from, for example, Meijo Nano Carbon Co., Ltd., Honjo Chemical Corporation, and Kusumoto Chemicals, Ltd.

In other examples and comparative examples, the types of negative electrode active materials used and the blending amounts of the negative electrode active materials were changed as shown in Table 1. The sources of the silicon-based active material (A) SiO$_x$ and the carbon-based active materials (B) and (C) were the same as those in Example 1. The mass ratio of the carbon-based active material (B) and the carbon-based active material (C) was set to 7:3 for Examples 5 and 6, and was set to 1:1 for other examples and comparative examples, similar to Example 1. The types and amounts of the binder and the conductive additive used, and the method for producing the negative electrode active material layer were also the same as in Example 1 for all examples and comparative examples.

(Production of Lithium-ion Secondary Battery, All examples and Comparative Examples) The positive electrode and the negative electrode cut to 3 cm × 3 cm were arranged to face each other with a separator interposed therebetween. A separator having a thickness of 10 $\mu$m with ceramic coating on both sides of a microporous polyethylene film was used.

The non-aqueous electrolyte was prepared by mixing an organic solvent and a supporting salt. The cyclic carbonate (EC) and chain carbonates (DEC, EMC) were adjusted to a volume ratio of 1/6, and lithium hexafluorophosphate (LiPF$_6$) and fluoroethylene carbonate (FEC) were added as supporting salts.

The positive electrode, the negative electrode, the separator, and the non-aqueous electrolyte were placed in the laminated exterior body, and the laminate was sealed to produce a lithium-ion secondary battery which is a non-aqueous electrolyte secondary battery. The positive electrode and negative electrode were connected with tabs and were in a state of being electrically connected from the outside of the laminate.

(Evaluation of Lithium-ion Secondary Battery)

For the lithium-ion secondary battery produced in each example and comparative example, the capacity retention rate and the decrease in average voltage during the discharge of 1C were measured and evaluated by the following methods.

(Energy Density)

The produced battery was charged at 7.2 mA, and after the upper limit voltage reached 4.2 V, the battery was charged at a constant voltage until the total charging time reached 12 hours. Thereafter, the battery was discharged at a constant current at 7.2 mA until the lower limit voltage reached 2.5 V. After being charged again under the same conditions, the battery was left in a constant temperature bath at 45°C for 3 days, discharged again under the same conditions, and charged and discharged again. The capacity and the average voltage during the final discharge were evaluated. Also, after completion of the evaluation, the thickness of the laminated battery (hereinafter sometimes simply referred to as "cell") was evaluated.

From the thickness of the cell, the sum of the thicknesses of the unit components of the laminated battery was obtained, which were the thickness of the positive electrode active material layer, a half of the thickness of the positive electrode current collector, the thickness of the separator, the thickness of the negative electrode active material layer, and a half of the thickness of the negative electrode current collector. Specifically, the thickness of the laminate, the half the thickness of the positive electrode current collector, and the half the thickness of the negative electrode current collector were subtracted from the thickness of the cell.

The calculation formula is as follows:

(capacity during cell discharge) × (average voltage during cell discharge)/(electrode area) / (thickness of the positive electrode active material layer + half of thickness of a positive electrode current collector + thickness of separator + thickness of negative electrode active material layer + half thickness of negative electrode current collector)　　　[Equation 1]

According to the above, the energy density of the unit component portion of the laminated battery was obtained.

(Capacity retention rate)

The produced battery was placed in a constant temperature chamber at 45°C, charged at 30 mA, and after the upper limit voltage reached 4.2 V, the battery was charged at a constant voltage until the total charging time reached 2.5 hours. Thereafter, the battery was discharged at a constant current at 30 mA until the lower limit voltage reached 2.5 V. Such charge and discharge processes were repeated 100 times, and the ratio between the discharge capacity at the 100th cycle and the discharge capacity at the 1st cycle was taken as the capacity retention rate after 300 cycles.

[Table 1]

| Table 1: Mixture & battery properties of negative electrode active material | | | | | | | |
|---|---|---|---|---|---|---|---|
| | Silicon-based active material (A) $D50_A$ [μm] | Silicon-based active material (B) $D50_B$ [μm] | Silicon-based active material (C) $D50_C$ [μm] | $D50_{max}/D50_{min}$ | Negative electrode active material mass ratio (A)/[(B)+(C)] | Capacity retention rate after 300 cycles [%] | Energy density [Wh/L] |
| Example 1 | 11.0 | 13.9 | 9.5 | 1.46 | 15: 85 | 95.7 | 767 |
| Example 2 | 8.2 | 13.9 | 9.5 | 1.70 | 15: 85 | 95.2 | 758 |
| Example 3 | 13.1 | 13.9 | 9.5 | 1.46 | 15: 85 | 95.6 | 760 |
| Example 4 | 7.0 | 13.9 | 9.5 | 1.99 | 15: 85 | 94.1 | 750 |
| Example 5 | 8.2 | 13.9 | 16.0 | 1.95 | 15: 85 | 95.6 | 762 |
| Example 6 | 13.1 | 11.0 | 12.5 | 1.19 | 15: 85 | 95.3 | 755 |

(continued)

| Table 1: Mixture & battery properties of negative electrode active material | | | | | | | |
|---|---|---|---|---|---|---|---|
| | Silicon-based active material (A) D50$_A$ [μm] | Silicon-based active material (B) D50$_B$ [μm] | Silicon-based active material (C) D50$_C$ [μm] | D50$_{max}$/D50$_{min}$ | Negative electrode active material mass ratio (A)/ [(B)+(C)] | Capacity retention rate after 300 cycles [%] | Energy density [Wh/L] |
| Example 7 | 7.0 | 13.9 | 12.5 | 1.99 | 15: 85 | 93.5 | 749 |
| Example 8 | 11.0 | 17.3 | 9.5 | 1.82 | 15: 85 | 94.0 | 752 |
| Example 9 | 5.9 | 11.0 | 9.5 | 1.86 | 15: 85 | 91.9 | 745 |
| Example 10 | 11.0 | 13.9 | 9.5 | 1.46 | 10: 90 | 96.0 | 730 |
| Example 11 | 11.0 | 13.9 | 9.5 | 1.46 | 20: 80 | 93.2 | 782 |
| Comparative Example 1 | 11.0 | 22.5 | 12.5 | 2.05 | 15: 85 | 84.8 | 750 |
| Comparative Example 2 | 5.4 | 11.0 | 9.5 | 2.04 | 15: 85 | Rapid deterioration | - |
| Comparative Example 3 | 8.2 | 17.3 | 9.5 | 2.11 | 15: 85 | Rapid deterioration | - |
| Comparative Example 4 | 11.0 | 13.9 | 9.5 | 1.46 | 5: 95 | 96.0 | 680 |
| Comparative Example 5 | 11.0 | 13.9 | 9.5 | 1.46 | 25: 75 | 84.3 | 800 |

The non-aqueous electrolyte secondary battery using the negative electrode for the non-aqueous electrolyte secondary battery of the embodiment of the invention has a high energy density and a high capacity retention rate after charge and discharge. On the other hand, the non-aqueous electrolyte secondary battery using the negative electrode for non-aqueous electrolyte secondary battery of the comparative example showed a decrease in either energy density or capacity retention rate, and could not improve both energy density and life. In the embodiment, SiO$_x$ with x=1 was used as the silicon-based active material for the experiment, but if SiO$_x$ with x in the range of 0.5 to 1.6 is used, results with the same tendency are expected to be obtained. By optimizing the blending ratio of the silicon-based active material and the carbon-based active material, and the particle diameters of the silicon-based active material and the two types of carbon-based active materials, appropriate particle packing density of the negative electrode active material layer can be obtained, and by suppressing the expansion of the electrode, the energy density and cycle capacity retention rate of the non-aqueous electrolyte secondary battery can be improved.

The results suggest that in a composite negative electrode including the silicon-based active material (A), the carbon-based active material (B), and the carbon-based active material (C), by adjusting D50$_{max}$/D50$_{min}$, which is the ratio of the maximum average particle diameter D50$_{max}$ to the minimum average particle diameter D50$_{min}$ among the respective average particle diameters, within a predetermined range, the packing density of the negative electrode active material particles is optimized and expansion and contraction accompanying charge and discharge are suppressed. Furthermore, a tendency is observed that the capacity retention rate of the battery increases as the average particle diameters of the silicon-based active material (A) and carbon-based active materials (B) and (C) increase, but it is considered that when D50$_{max}$/D$_{50min}$ exceeds 2, the packing density of the negative electrode active material does not increase, and the expansion and contraction of the negative electrode active material layer cannot be suppressed.

The negative electrode for non-aqueous electrolyte secondary battery of the invention has been described in detail above, but the invention is not limited to the above embodiments and the above examples, and it goes without saying that various improvements and modifications may be made within the scope that does not depart from the gist of the invention.

**Claims**

1. A negative electrode for a non-aqueous electrolyte secondary battery,

   wherein the negative electrode comprises a negative electrode active layer which comprises a negative electrode active material, a binder, and a conductive additive,
   the negative electrode active material comprises: a silicon-based active material (A), comprising $SiO_x$ (x being a number satisfying $0.5 \leqq x \leqq 1.6$);
   a carbon-based active material (B) formed by secondary particles formed by aggregation of primary particles; and a carbon-based active material (C) formed by primary particles differing from primary particles of the carbon-based active material (B),
   wherein an average particle diameter of each of the silicon-based active material (A), the carbon-based active material (B), and the carbon-based active material (C) are $D50_A[\mu m]$, $D50_B[\mu m]$, and $D50_C[\mu m]$, respectively, a maximum value among the average particle diameters is defined as $D50_{max}$, a minimum value among the average particle diameters is defined as $D50_{min}$, and a value of $D50_{max}/D50_{min}$ is smaller than 2.

2. The negative electrode as claimed in claim 1, wherein the average particle diameter $D50_A$ of the silicon-based active material (A) is 7 $\mu$m or more and 13 $\mu$m.

3. The negative electrode as claimed in claim 1 or 2, wherein the carbon-based active material (B) and the carbon-based active material (C) comprise artificial graphite, hard carbon, soft carbon, or any mixture thereof.

4. The negative electrode as claimed in any one of claims 1 to 3, wherein the carbon-based active material (B) is artificial graphite having a surface coated with amorphous carbon, and the carbon-based active material (B) is artificial graphite having a surface that is not coated.

5. The negative electrode as claimed in any one of claims 1 to 4, wherein a content of the silicon-based active material (A) is 10 mass% or more and 20 mass% or less with respect to a total amount of the silicon-based active material (A), the carbon-based active material (B), and the carbon-based active material (C) in the negative electrode.

6. The negative electrode as claimed in any one of claims 1 to 5, wherein the conductive additive comprises carbon nanotubes.

7. The negative electrode as claimed in any one of claims 1 to 6, wherein the conductive additive comprises bundled single-wall carbon nanotubes in which single-wall carbon nanotubes are bundled.

8. The negative electrode as claimed in any one of claims 1 to 7, wherein a portion of the conductive additive is present in a state of being attached in advance to at least one surface of the silicon-based active material (A), the carbon-based active material (B), and the carbon-based active material (C).

9. The negative electrode as claimed in any one of claims 1 to 8, wherein the binder comprises polyacrylic acid.

10. A non-aqueous electrolyte secondary battery, comprising: the negative electrode for the non-aqueous electrolyte secondary battery as claimed in any one of claims 1 to 9; a positive electrode for the non-aqueous electrolyte secondary battery; a separator; and an electrolyte.

## INTERNATIONAL SEARCH REPORT

| International application No. |
| --- |
| **PCT/JP2023/044960** |

| A. | CLASSIFICATION OF SUBJECT MATTER |
| --- | --- |

*H01M 4/36*(2006.01)i; *H01M 4/13*(2010.01)i; *H01M 4/48*(2010.01)i; *H01M 4/62*(2006.01)i; *H01M 4/587*(2010.01)i
FI:   H01M4/36 E; H01M4/48; H01M4/587; H01M4/62 Z; H01M4/36 B; H01M4/13; H01M4/36 C

According to International Patent Classification (IPC) or to both national classification and IPC

| B. | FIELDS SEARCHED |
| --- | --- |

Minimum documentation searched (classification system followed by classification symbols)

H01M4/36; H01M4/13; H01M4/48; H01M4/62; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2023-503706 A (CONTEMPORARY AMPEREX TECHNOLOGY CO., LTD.) 31 January 2023 (2023-01-31) paragraphs [0001], [0028]-[0033], [0135]-[0137], [0144], [0149], [0169]-[0187] | 1-6, 8-10 |
| Y | paragraphs [0001], [0028]-[0033], [0135]-[0137], [0144], [0149], [0169]-[0187] | 7 |
| Y | WO 2021/085255 A1 (MURATA MANUFACTURING CO., LTD.) 06 May 2021 (2021-05-06) paragraph [0044], fig. 4 | 7 |
| Y | JP 2022-529987 A (LG ENERGY SOLUTION LTD.) 27 June 2022 (2022-06-27) paragraph [0010] | 7 |
| A | WO 2015/045314 A1 (SANYO ELECTRIC CO., LTD.) 02 April 2015 (2015-04-02) paragraph [0031] | 1-10 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 February 2024** | **20 February 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2023/044960**

| Patent document cited in search report | | | Publication date (day/month/year) | Patent family member(s) | | | Publication date (day/month/year) |
|---|---|---|---|---|---|---|---|
| JP | 2023-503706 | A | 31 January 2023 | US | 2022/0367872 | A1 | |
| | | | | paragraphs [0002], [0033]-[0039], [0178]-[0180], [0189], [0195], [0215]-[0239] | | | |
| | | | | EP | 4075542 | A1 | |
| | | | | KR | 10-2022-0110862 | A | |
| | | | | CN | 115917780 | A | |
| | | | | WO | 2022/140902 | A1 | |
| WO | 2021/085255 | A1 | 06 May 2021 | US | 2022/0246979 | A1 | |
| | | | | paragraph [0061], fig. 4 | | | |
| | | | | CN | 114641871 | A | |
| JP | 2022-529987 | A | 27 June 2022 | US | 2022/0320518 | A1 | |
| | | | | paragraph [0013] | | | |
| | | | | WO | 2021/066554 | A1 | |
| | | | | EP | 3951953 | A1 | |
| | | | | KR | 10-2021-0040801 | A | |
| | | | | CN | 113785422 | A | |
| WO | 2015/045314 | A1 | 02 April 2015 | US | 2016/0204430 | A1 | |
| | | | | paragraph [0032] | | | |
| | | | | CN | 105493330 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016219275 A

- JP 2019029311 A